(19) Europäisches Patentamt
European Patent Office
Office européen des brevets

(11) Numéro de publication: 0 151 893
A1

(12) # DEMANDE DE BREVET EUROPEEN

(21) Numéro de dépôt: 84402427.3

(22) Date de dépôt: 28.11.84

(51) Int. Cl.⁴: B 01 J 21/04
B 01 J 37/02, C 07 C 1/04

(30) Priorité: 09.12.83 FR 8319718

(43) Date de publication de la demande: 21.08.85 Bulletin 85/34

(84) Etats contractants désignés: DE GB NL

(71) Demandeur: SOCIETE FRANCAISE DES PRODUITS POUR CATALYSE PRO-CATALYSE
4, avenue de Bois Préau
F-92502 Rueil Malmaison(FR)

(72) Inventeur: Dupin, Thierry
6, rue Jean Villard
F-95330 Domont(FR)

(72) Inventeur: Caillod, Jacques
31, rue Phanie Leleu
F-95150 Taverny(FR)

(72) Inventeur: Leroux, Patrick
68, rue de la Croix
F-92000 Nanterre(FR)

(72) Inventeur: Martino, Germain
Batiment Condé 80, av. F. Levebvre
F-78300 Poissy(FR)

(54) **Procede de fabrication d'un catalyseur a base d'alumine.**

(57) L'invention concerne un procédé de fabrication d'un catalyseur renfermant un support constitué en majeure partie d'alumine et une phase active, le support d'alumine mis en oeuvre pour la fabrication du catalyseur étant obtenu par mélange d'un liant d'alumine et d'une charge à base d'alumine.

Le procédé est caractérisé en ce que une partie au moins de la phase active ou de son précurseur est introduite au cours de la fabrication du support de telle façon que cette partie de phase active se trouve dans le liant ou dans la charge avant le ou au cours du mélange de la charge et du liant.

Le catalyseur ainsi préparé peut être utilisé dans les réactions d'hydrogénation d'hydrocarbures et d'oxyde de carbone.

EP 0 151 893 A1

Croydon Printing Company Ltd.

# PROCEDE DE FABRICATION D'UN CATALYSEUR A BASE D'ALUMINE.

La présente invention concerne un procédé de fabrication d'un catalyseur à base d'alumine qui renferme une phase active contenant généralement, d'une part au moins un métal du groupe VIII de la classification périodique et d'autre part au moins un métal additionnel utilisé à titre de promoteur.

Généralement, dans l'art antérieur, le catalyseur est préparé en deux stades :

a) on prépare ou on achète un support,

b) on dépose ensuite sur le support une phase activante renfermant généralement ($\alpha$) au moins un métal appartenant le plus souvent au groupe VIII de la classification périodique des éléments et présent dans la majeure partie des cas dans le catalyseur sous forme métallique et/ou sous forme par exemple d'un oxyde ou d'un support et ($\beta$) éventuellement au moins un métal dit additionnel (ou promoteur) appartenant à l'un ou l'autre groupe de la classification périodique des éléments et généralement présent dans le catalyseur sous forme d'un oxyde ou d'un sulfure, par exemple.

Selon l'art antérieur, on peut utiliser plusieurs méthodes pour ajouter la phase active du catalyseur dans le support :
d'une façon générale on peut incorporer dans le support chaque métal individuellement ou tous les métaux ensemble, par toute méthode adéquate à savoir par coprécipitation ou cogélation avec le support poreux ou échange ionique avec le support gélifié ou encore imprégnation avec le support, soit avant soit après le séchage et la calcination de ce support.

D'une façon générale, l'invention concerne un procédé de fabrication d'un catalyseur comportant une phase active constituée d'au moins un métal de la mine du platine et d'au moins un métal additionnel et un support obtenu par mélange d'un liant et d'une charge, le procédé comportant les étapes suivantes :

1°) mélange d'une charge, d'un liant et d'au moins une partie de la phase active,
2°) mise en forme du mélange,
3°) séchage et éventuellement calcination,
4°) introduction éventuelle de la partie de la phase active restante, suivie alors d'un séchage puis d'une activation,

et procédé dans lequel la majeure partie des métaux de la mine du platine et/ou la majeure partie des métaux additionnels sont introduits soit dans le liant soit dans la charge lors de la première étape.

La présente invention met en oeuvre un catalyseur dont le support est préparé à partir d'une composition aqueuse d'alumine, ce support comportant un liant qui constitue essentiellement la partie dispersée et une charge qui constitue essentiellement la partie non dispersée de la composition. De préférence, il convient que le taux de dispersion dans l'eau de la composition, résultant du mélange du liant et de la charge, soit compris entre environ 10 et 60%, et pour certaines application des catalyseurs, il peut convenir qu'en outre, la granulométrie de la partie non dispersée de la composition soit telle que le diamètre moyen des particules d'alumine qui la constituent est compris entre 1 et 15 microns, au moins 70% de ces particules ayant un diamètre compris entre la moitié du diamètre moyen et le double du diamètre moyen.

Le taux de dispersion est représenté par la proportion d'alumine qui reste en suspension colloïdale totale après que la composition ait été soumise à une centrifugation. On peut mesurer ce taux de dispersion de la façon suivante : la composition aqueuse d'alumine est diluée de façon à obtenir une concentration en alumine totale égale à 100g/l ; 100cm$^3$ de cette solution sont soumises à une agitation violente pendant 10 minutes ; la solution est ensuite centrifugée pendant 10 minutes à

la vitesse de 3000 tours par minute ; on sépare la partie décantée de la partie non décantée constituée par une suspension colloïdale d'alumine ; on calcine et on pèse la partie décantée, le taux de dispersion est exprimé comme étant le rapport entre la quantité totale initiale d'alumine de la composition moins la quantité d'alumine décantée sur la quantité totale initiale d'alumine de la composition.

Dans le procédé de la présente invention, le taux de dispersion dans l'eau de la composition aqueuse d'alumine, est de préférence compris entre 10 et 100% et plus particulièrement entre 15 et 40%, la granulométrie de la partie non dispersée de la composition est telle que, de préférence, le diamètre moyen des particules d'alumine qui la constituent est compris entre 1 et 15 microns.

La partie non dispersée de la composition est essentiellement constituée par la charge ; une partie mineure de celle-ci peut provenir du liant.

La proportion en poids du liant dans la composition est de préférence comprise entre 10 et 60% et plus particulièrement entre 15 et 40%. Il en résulte que la proportion en poids de la charge dans la composition est alors comprise entre 40 et 90% et plus particulièrement entre 60 et 85%. (par rapport au poids total du support).

Selon la présente invention, le liant d'alumine est constitué essentiellement d'une partie d'alumine dispersée et éventuellement d'une partie mineure d'alumine non dispersée , la partie dispersée représentant de préférence au moins 70% en poids du liant. Dans la suite de cette description, on appellera liant la partie dispersée (même si tout le liant n'est pas dispersé) et charge la partie non dispersée (même si une partie de la charge, inférieure à 10% en poids de la charge est à l'état dispersé).

L'invention concerne un nouveau procédé de fabrication de catalyseur renfermant (a) un support constitué en majeure partie d'alumine et (b) une phase active, le support d'alumine mis en oeuvre pour la fabrication

du catalyseur étant obtenu par mélange, mise en forme, séchage et calcination d'un liant d'alumine et d'une charge d'alumine, le procédé étant caractérisé en ce que une partie au moins de la phase active a été introduite au cours de la fabrication du support de telle façon que cette phase active se trouve en majeure partie dans le liant ou en majeure partie dans la charge ou à la fois dans la charge et dans le liant. Une méthode consiste par exemple à introduire une partie au moins de la phase active, en majeure partie dans le liant ou en majeure partie dans la charge avant le mélange de la charge et du liant avant le mélange ou au cours du mélange de la charge et du liant. Une autre méthode consiste, par exemple, à introduire une partie au moins de la phase active en majeure partie dans le liant ou en majeure partie dans la charge, au cours du mélange du liant et de la charge.

Selon une variante du procédé, la charge d'alumine (en vue d'améliorer sa stabilité thermique) peut être au moins partiellement remplacée par un oxyde choisi dans le groupe constitué par les oxydes de magnésium, calcium, strontium, baryum, scandium, yttrium, les lanthanides, gallium, indium, thallium, bore, silicium, titane, zirconium, hafnium, thorium, germanium, étain, plomb, vanadium niobium, tantale, chrome, molybdène, tungstène, rhénium, fer, cobalt, nickel, cuivre, zinc et bismuth.

Les catalyseurs préparés conformément à l'invention, peuvent être utilisés pour les réactions de conversions d'hydrocarbures et notamment d'hydroconversions d'hydrocarbures. On citera, en particulier, les procédés de reformage (ou reforming) catalytique ainsi que les procédés catalytiques de fabrication d'hydrocarbures aromatiques, procédés effectués par exemple à une température comprise entre 430 et 600°C, sous une pression absolue comprise entre 0,1 et 5 MPa avec une vitesse horaire comprise entre 0,1 et 10 volumes de charge liquide par volume de catalyseur, le rapport molaire hydrogène/hydrocarbures étant compris entre 1 et 20.

Ces catalyseurs conviennent aussi pour les réactions d'hydrocraquage qui sont généralement effectuées à une température comprise entre environ 260 et 530°C et sous une pression comprise entre environ 0,8 et 25 MPa. Les conditions de conversion comprennent une vitesse spatiale horaire du liquide, ou VSHL, ou volume par heure de charge liquide à 15°C par volume de catalyseur, d'environ 0,1 à 10,0, ayant de préférence une limite supérieure à 4,0 environ et un débit de circulation d'hydrogène d'environ 1 à 20 moles/mole de charge.

Les catalyseurs ainsi préparés conviennent également pour les réactions d'isomérisation d'hydrocarbures aromatiques (xylènes par exemple) réactions qui sont généralement effectuées à une température comprise entre environ 200 et 600°C, sous une pression comprise entre environ 0,005 et 7 MPa, le débit volumétrique horaire étant compris entre 0,1 et 10 fois le volume de catalyseur.

Les catalyseurs ainsi préparés conviennent encore pour les isomérisations, en atmosphère d'hydrogène, des hydrocarbures saturés comportant 4 à 7 atomes de carbone, à une température comprise entre 50 et 250°C, par exemple 100-200°C. On opère de préférence, sous une pression de 0,5 à 10 MPa, avec une vitesse spatiale de 0,2 à 10 litres de charge par litre de catalyseur et par heure. Le rapport molaire $H_2$/hydrocarbures est compris, par exemple, entre 0,01 : 1 et 10 : 1.

Les catalyseurs ainsi préparés conviennent également pour les réactions d'hydrodéalkylation d'hydrocarbures aromatiques ou de déalkylation à la vapeur d'eau d'hydrocarbures aromatiques, ces réactions étant effectuées dans les conditions opératoires connues généralement entre 300 et 600°C, pour fabriquer par exemple du benzène à partir de toluène ou à partir d'autres alkylbenzènes.

Les catalyseurs ainsi préparés conviennent encore pour les réactions dites de post combustion, c'est-à-dire pour le traitement des gaz d'échappement des moteurs à combustion interne.

Ces catalyseurs conviennent encore pour les divers hydrotraitements de produits pétroliers, comme par exemple l'hydrodésulfuration, l'hydrodémétallation, l'hydrodénitification.

Ils peuvent également être utilisés pour les réactions de récupération du soufre à partir de composés soufrés (catalyse Claus notamment) et également pour les réactions de méthanisation ou encore les réactions d'hydrogénation d'hydrocarbures.

Les catalyseurs utilisés dans les réactions énumérées ci-dessus renferment donc un support, généralement d'alumine, sur lequel a été introduite une phase dite active à base d'au moins un métal de la classification périodique et le plus souvent depuis une vingtaine d'année, au moins deux métaux et davantage.

Ainsi, les catalyseurs spécifiques appropriés aux procédés énumérés ci-dessus, sont les catalyseurs renfermant un support d'alumine et des teneurs critiques de divers éléments métalliques adéquats (métaux ou composés de métaux). Ainsi, à titre d'exemples, des catalyseurs spécifiques sont ceux qui renferment généralement en poids par rapport au support d'alumine :

a) 0,05 à 2% d'au moins un métal précieux choisi parmi le platine, le palladium, l'iridium, le ruthénium, le rhodium et l'osmium (et de préférence le platine, l'iridium, le ruthénium et le rhodium), ou 0,1 à 30% d'au moins un métal choisi parmi le fer, le cobalt et le nickel

b) éventuellement 0,01 à 25% d'au moins un deuxième métal choisi par exemple parmi le titane, le rhénium, l'étain, le germanium, l'indium, le thallium, le manganèse, ou encore, le cuivre, l'argent, l'or, le niobium, le lanthane, le cérium, le samarium, et autres métaux de la famille des terre-rares, le zirconium, le thorium, l'hafnium, le plomb, le gallium, le vanadium et l'uranium, le chrome, le molybdène, le tungstène, le zinc, le cadminum, le bismuth, l'antimoine, etc... et

c) éventuellement encore pour certaines réactions, 0,1 à 10% d'un halogène, par exemple le chlore ou le fluor.

De tels catalyseurs, largement utilisés dans l'art antérieur, se sont peu à peu perfectionnés les uns par rapport aux autres par l'utilisation de tel ou tel métal promoteur utilisé avec telle ou telle concentration critique, et ont permis d'obtenir des résultats souvent remarquables dans les réactions précédemment énumérées pour ce qui concerne en particulier les rendements et la sélectivité de la réaction ainsi que la stabilité, donc la durée de vie, du catalyseur.

On a maintenant constaté que pour un même catalyseur (c'est-à-dire, un catalyseur renfermant ~~un support d'alumine~~ et des teneurs identiques en métaux actifs), on peut augmenter d'une part le rendement et la sélectivité de la réaction pour laquelle il est conçu et d'autre part la stabilité et durée de vie de ce catalyseur. Ces améliorations sont dues à une méthode particulière de préparation des catalyseurs. Ainsi, dans les réactions de reforming par exemple, l'amélioration des rendements ne serait-ce que de 0,1% en poids, se traduit par un gain important en essence que l'on peut préciser comme suit :
Une unité industrielle de dimensions moyennes fonctionnant avec une VVH de 1,65 (volume de naphta/volume de catalyseur/heure) nécessite environ 50 tonnes de catalyseur. Celà signifie que l'on utilise dans l'unité :

40 X 1,65 = 66 tonnes de charge par heure,
soit 66 X 24 = 1584 tonnes de charge par jour,
soit 1584 X 365 = 578.160 tonnes de charge par an.

Un rendement pondéral de 75% se traduit par l'obtention annuelle de

$$578.160 \times \frac{75}{100} = 433.620 \text{ tonnes d'essence.}$$

Une augmentation de seulement 0,1% en rendement donnerait, par an :

$$578.160 \times \frac{75,1}{100} = 434.198,16 \text{ tonnes d'essence.}$$

Cette augmentation pourtant relativement modeste de rendement se traduit donc en un an par un gain de

434.198,16 - 433.620 = 578,16 tonnes d'essence,

ce qui est loin d'être négligeable : d'où l'intérêt présenté par toute nouvelle méthode de fabrication de catalyseur.

La méthode particulière de préparation de catalyseurs permet d'utiliser les catalyseurs dans des conditions opératoires sévères. Ainsi, plus particulièrement, l'utilisation des catalyseurs préparés conformément à la présente invention s'applique :

- aux réactions de reformage en vue d'obtenir une essence d'indice d'octane clair supérieur ou égal à 102. Les conditions sévères des réactions d'hydroreforming ou d'hydroreformage catalytique sont plus particulièrement les suivantes : la température moyenne est comprise entre, environ 510 et 580°C, la pression est comprise entre, environ 0,5 et 1,8 MPa, (5 et 18 kg/$cm^2$) de préférence 0,6 et 1,3 MPa, la vitesse horaire est comprise entre 1 et 10 volumes de charge liquide par volume de catalyseur et le taux de recyclage est compris entre 6 et 10 moles d'hydrogène par mole de charge. La charge est généralement un naphta distillant entre environ 60°C et environ 220°C, en particulier un naphta de distillation directe,

- aux réactions de production d'hydrocarbures aromatiques à partir d'essences insaturées ou non (pour la production de benzène, de toluène et de xylènes). Si la charge est insaturée, c'est-à-dire si elle contient des dioléfines et des monooléfines, elle devra d'abord en être débarassée par hydrogénation sélective ou totale. Ensuite, la charge éventuellement débarrassée par hydrogénation de sensiblement toutes ses dioléfines et monooléfines, lorsqu'elle en contient, est soumise à un traitement à l'hydrogène, en présence d'un catalyseur, à une température comprise entre environ 530 et 600°C, sous une pression comprise entre 0,1 et 1,3 MPa (1 à 13 kg/$cm^2$), le débit volumétrique horaire de charge liquide étant de l'ordre de 1 à 10 fois le volume du catalyseur, le rapport molaire hydrogène/hydrocarbures étant de l'ordre de 6 à 20. La charge peut être constituée d'essences de pyrolyse, de cracking, en particulier de steam-cracking, ou de reforming catalytique, ou être encore constituée d'hydrocarbures naphténiques capablespar déshydrogénation de se transformer en hydrocarbures aromatiques.

Dans le procédé de l'invention, le liant d'alumine se présente sous forme de poudre.

Le liant d'alumine mis en oeuvre doit être gélifiable ou coagulable par effet thermique ou chimique.

La gélification ou coagulation par effet thermique est bien connue de l'homme de l'art et peut être obtenue par évaporation de l'eau de la suspension ou de la dispersion aqueuse d'alumine formant le liant. La gélification ou coagulation par effet chimique est également bien connue de l'homme de l'art et peut être obtenue par augmentation du pH de la suspension ou de la dispersion aqueuse d'alumine formant le liant à une valeur supérieure à 9 qui correspond au point isoélectrique de l'alumine.

Les liants d'alumine que l'on peut mettre en oeuvre selon l'invention sont notamment les suspensions ou dispersions aqueuses de boehmites fines ou ultra-fines qui sont composées de particules ayant des dimensions dans le domaine colloïdal c'est-à-dire, inférieures à 2000 A environ.

Les dispersions ou suspensions aqueuses de boehmites fines ou ultra-fines peuvent être obtenues ainsi qu'il est bien connu de l'homme de l'art par peptisation dans l'eau ou l'eau acidulée de ces produits. Les boehmites fines ou ultra-fines mises en oeuvre selon la présente invention peuvent notamment avoir été obtenues selon le procédé décrit dans les brevets français n° 1 262 182 et 1 381 282 ou dans la demande de brevet européen n° 15 196.

Le brevet français n° 1 262 182 décrit notamment un procédé de fabrication de boehmite fine ou ultra-fine par chauffage d'une dispersion aqueuse d'alumine en présence d'un radical d'acide monovalent, la dispersion aqueuse d'alumine ayant été obtenue à partir de chlorure basique d'aluminium, de nitrate d'aluminium, d'hydroxyde d'aluminium, de gel d'alumine ou de solutions colloïdales. Ce produit commercialisé

par la société Du Pont de Nemours sous la marque Baymal, représente une boehimte fine ou ultra-fine fibrillaire dont la surface spécifique est généralement comprise entre 250 et 350 $m^2/g$.

Le brevet français n° 1 381 282, décrit notamment un procédé de fabrication de boehmite fine ou ultra-fine consistant à faire évoluer à une température comprise entre 60 et 150°C une suspension ou un gâteau de gel d'alumine hydratée amorphe contenant jusqu'à 35% en poids d'alumine comptée en $Al_2O_3$, et par rapport à cette alumine comptée en molécules d'$Al_2O_3$, une quantité d'ions acides monovalents variant de 0,05 à 0,5, pendant un temps de 15 heures à 10 jours ; le gâteau ayant été obtenu par essorage, lavage et filtration de gel d'alumine précipité en contenu à un pH compris entre 8 et 9 à partir d'une solution d'aluminate de soude et d'acide nitrique. La surface spécifique de ces produits varie généralement entre 200 et 600 $m^2/g$.

La demande de brevet européen n° 15 196 décrit notamment un procédé de fabrication de boehmite au moins partiellement sous forme de boehmite ultra-fine par traitement dans un milieu aqueux ayant un pH inférieur à 9 d'une poudre d'alumine active obtenue par déshydratation rapide d'hydrargillite dans un courant de gaz chauds.

On peut également mettre en oeuvre comme liant d'alumine selon l'invention, les suspensions ou dispersions aqueuses obtenues à partir de pseudo-boehmite, de gels d'alumine amorphe, de gels d'hydroxyde d'aluminium ou d'hydrargillite ultra-fine.

La pseudo-boehmite peut notamment avoir été préparée selon le procédé décrit dans le brevet américain n° 3 360 670 par réaction d'une solution d'un aluminate alcalin avec une solution d'un acide minéral. Elle peut également avoir été préparée tel que décrit dans le brevet français n° 1 357 830 par précipitation à pH 9, à une température faiblement supérieure à l'ambiante à partir de réactifs de concentrations telles que l'on obtient environ 50 g/l d'alumine dans la dispersion.

Les gels d'alumine amorphe peuvent notamment avoir été préparés selon les procédés décrits dans l'article "Alcoa Paper n° 19 (1972) - page 9 à 12" et notamment par réaction d'aluminate et d'acide, ou d'un sel d'aluminium et d'une base ou d'un aluminate et d'un sel d'aluminium ou par hydrolyse de sels basiques d'aluminium, ou d'alcoolate d'aluminium obtenu par réaction entre de l'aluminium et un alcool.

Les gels d'hydroxyde d'aluminium peuvent notamment être ceux qui sont préparés selon les brevets américains n° 3 268 295 et 3 245 919.

L'hydrargillite ultra-fine peut notamment avoir été préparée selon le procédé décrit dans le brevet français n° 1 373 808, par évolution à une température comprise entre la température ambiante et 60°C de gels d'alumine sous forme de gâteau et contenant par rapport à l'alumine comptée en molécules d'$Al_2O_3$, 0,10 ions acides monovalents.

Selon une variante du procédé de l'invention, le liant d'alumine peut être au moins partiellement remplacé par une suspension ou une dispersion de silice présentant les mêmes caractéristiques que le liant d'alumine.

Dans la présente invention, la charge d'alumine est constituée essentiellement d'une partie d'alumine non dispersable et éventuellement d'une partie mineure d'alumine dispersable qui est dispersée dans la composition, la partie non dispersable représentant au moins 90% en poids de la charge. Il peut être préférable que la granulométrie de la partie non dispersée de la composition, qui est donc essentiellement constituée par la charge, soit telle que le diamètre moyen des particules d'alumine qui la constituent, est compris entre 1 et 15 microns.

La charge d'alumine mise en oeuvre peut être tout composé d'alumine présentant les caractéristiques qui ont été exposées ci-dessus. On peut en particulier, utiliser des composés hydratés d'alumine tels que : l'hydrargillite, la bayerite, la boehmite, la pseudo-boehmite et les gels d'alumine amorphe ou essentiellement amorphe. On peut également mettre en oeuvre les formes déshydratées ou partiellement déshydratées

de ces composés qui sont constitués d'alumines de transition et qui comportent au moins une des phases prises dans le groupe constitué par rhô, chi, êta, gamma, kappa, thêta, delta, alpha.

En particulier, on pourra notamment utiliser des charges d'alumine obtenues selon l'un des procédés suivants, après éventuellement broyage et tamisage des particules :

-On précipite une solution aqueuse d'un sel d'aluminium par une solution d'un aluminate alcalin, on atomise le précipité obtenu puis on le remet en suspension dans une solution aqueuse ayant un pH compris entre 4,5 et 7, on atomise et on sèche la bouillie d'alumine obtenue, puis on lave, sèche et calcine le produit. (Procédé décrit dans le brevet US 3 520 654).

-Par précipitation d'un gel d'alumine à un pH compris entre 7,5 et 11, lavage, essorage, remise en suspension, déshydratation rapide du produit dans un courant de gaz chauds à une température d'entrée comprise entre environ 350 et 1000°C puis calcination. (Procédé décrit dans le brevet FR 2 221 405).

- Par précipitation d'un gel d'alumine à un pH compris entre 7 et 10,5, mûrissement du précipité à un pH compris entre 10 et 11, homogénéisation et atomisation à 250-550°C de la bouillie obtenue puis calcination. (Procédé décrit dans le brevet GB 888 772).

- Par précipitation d'un aluminate alcalin par un acide minéral à une température comprise entre 30 et 75°C, mûrissement dans un second réacteur à 35-70°C à un pH voisin de 7, recyclage de la bouillie obtenue dans le réacteur de mélange, filtration, lavage, séchage du produit par atomisation puis calcination. (Procédé décrit dans le brevet US 3 630 670).

- Par déshydration rapide d'hydroxydes ou d'oxyhydroxydes d'aluminium, et, plus particulièrement, d'hydrargillite dans un courant de gaz chauds ; cette déshydratation étantopérée dans n'importe quel appa-

reillage approprié à l'aide d'un courant de gaz chauds, la température d'entrée des gaz dans l'appareillage variant généralement de 400 à 1200°C environ, le temps de contact de l'hydroxyde ou de l'oxyhydroxyde avec les gaz chauds étant généralement compris entre une fraction de seconde et 4-5 secondes ; un tel procédé de préparation de poudre d'alumine active a notamment été décrit dans le brevet français n° 1 108 011.

- Par traitement dans un milieu aqueux ayant un pH inférieur à 9 d'une poudre d'alumine active obtenue par déshydratation rapide d'hydrargillite dans un courant de gaz chauds, séchage par atomisation, puis, calcination. (Procédé décrit dans la demande de brevet européen n° 15 196).

Les charges d'alumine obtenues selon les divers procédés, peuvent se classer en deux groupes. Le premier groupe concerne les charges obtenues après séchage et éventuellement calcination qui présentent un certain taux de dispersion.

Ces produits sont utilisables tels quels en tant que charge après éventuellement broyage et tamisage. Le deuxième groupe concerne les charges obtenues après séchage qui présentent un taux de dispersion inférieur à celui des charges du premier groupe. Ces charges nécessitent pour être mises en oeuvre, une étape de calcination à une température supérieure à 300°C, elles sont alors utilisables selon l'invention, après éventuellement broyage et tamisage.

Selon le procédé de l'invention, le liant et/ou la charge d'alumine peut être au moins partiellement remplacé par un oxyde choisi parmi ce groupe constitué par au moins un oxyde de métaux qu'on a appelés ci-dessus métaux promoteurs ou additionnels.

Dans l'art antérieur, on peut opérer le mélange de la charge et du liant sous forme de poudres. Le liant sous forme de poudre étant constitué par les divers produits : boehmite, pseudo-boehmite, bayérite, gels d'alumine amorphe, gels d'hydroxyde d'aluminium, hydrargillite

ultra-fine à l'état non peptisé. On met ensuite en contact, le mélange poudreux avec de l'eau ou de l'eau acidulée. Le mélange charge-liant-eau est réalisé de telle façon que le pH de la composition finale est inférieur à 4 dans des proportions telles que le taux de dispersion de la composition finale, est compris entre 10 et 60%.

Selon un autre mode d'emploi, on peut mélanger sous agitation la charge sous forme de poudre et le liant sous forme de suspension ou de dispersion d'alumine dans des proportions telles que le taux de dispersion de la composition soit compris entre 10 et 60% et que le pH de la composition finale soit inférieur à 4.

La présente invention concerne un procédé de fabrication de catalyseur caractérisé essentiellement en ce que au moins une partie de la phase active ou de son précurseur est introduite au cours de, ou avant la mise en forme du support, c'est-à-dire au cours du ou avant le mélange du liant et de la charge. La phase active comporte généralement au moins un métal du groupe VIII, généralement présent dans le catalyseur sous forme métallique notamment lorsque le catalyseur est un métal noble du groupe du platine, et, éventuellement au moins un autre métal utilisé généralement sous forme d'un oxyde ou d'un sulfure comme promoteur de l'activité du premier métal. Une partie au moins de la phase active, comme on l'explique plus précisément ci-dessous pourra être introduite au choix soit dans le liant du support soit dans la charge du support, soit dans la charge et le liant. Si toute la phase active n'est pas introduite en cours de la fabrication du support, le complément de phase active sera introduit ultérieurement sur le support selon les méthodes classiques.

D'une façon plus précise, ladite partie au moins de la phase active ou de son précurseur est introduite ($\alpha$) soit dans la charge
($\beta$) soit dans le liant
($\gamma$) soit encore à la fois dans la charge et dans le liant.

On peut ajouter ladite partie de phase active sensiblement en totalité dans le liant et ajouter la charge ensuite (technique I ci-dessous).

On peut ajouter ladite partie de phase active sensiblement en totalité dans la charge et ajouter le liant ensuite (technique II ci-dessous).

On peut ajouter ladite partie de phase active dans le liant et/ou dans la charge, lors du mélange de la charge et du liant (technique III ci-dessous).

Technique I :

Si l'on ajoute la phase active, en majeure partie dans le liant (avant de mélanger le liant à la charge), on peut procéder comme suit :

(1) - soit par imprégnation du liant par voie classique (sèche ou humide) à l'aide d'une solution aqueuse acide d'un sel ou composé du métal ou d'au moins un métal de la phase active.

Par exemple, une méthode consiste à imprégner le support au moyen de solutions de composés des métaux, que l'on désire introduire. On utilise soit une solution commune de ces métaux, soit des solutions distinctes pour chaque métal ou chaque groupe de métaux. Quand on utilise plusieurs solutions, on peut procéder à des séchages et/ou calcinations intermédiaires. On termine habituellement par une calcination, par exemple entre environ 400 et 1000°C, de préférence en présence d'oxygène libre, par exemple en effectuant un balayage d'air.

Comme exemples de composés de métaux autres que ceux des métaux nobles du groupe VIII (famille du platine), on peut mentionner, par exemple, les nitrates, les chlorures, les bromures, les fluorures, les sulfates, ou les acétates de ces métaux ou encore tout autre sel ou oxyde de ces métaux solubles dans l'eau ou l'acide chlorydrique (chloroplatinate par exemple). On peut encore mentionner des complexes organiques contenant ces métaux.

Les métaux nobles du groupe VIII et en particulier le platine peuvent être utilisés sous l'une quelconque de leurs formes connues, par exemple pour le platine, l'acide hexachloroplatinique, le chloroplatinate d'ammonium, le sulfure, le sulfate ou le chlorure de platine. Le ruthénium, à titre d'exemple, peut être utilisé sous une forme connue, quelconque, par exemple sous forme de chlorure, bromure, sulfate, ou sulfure ou encore sous forme, par exemple, d'acétylacétonate, etc...

L'halogène, lorsque le catalyseur en comporte un, peut provenir de l'un des halogénures ci-dessus ou être introduit sous forme d'acide chlorhydrique ou d'acide fluorhydrique, de chlorure d'ammonium, de fluorure d'ammonium, de chlore gazeux, ou d'halogénure d'hydrocarbure, par exemple $CCl_4$, $CH\ Cl_3$, ou $CH_3\ Cl$.

Une première méthode de préparation consiste par exemple à imprégner le support au moyen d'une solution aqueuse de nitrate ou autre composé d'un métal autre qu'un métal du groupe VIII, sécher vers 90 à 150°C et calciner sous air quelques heures à une température comprise entre 400 et 1200°C ; ensuite suivra une deuxième imprégnation au moyen d'une solution renfermant au moins un métal du groupe VIII (par exemple au moyen d'une solution d'acide hexachloroplatinique si on utilise du platine).

Une autre méthode consiste par exemple à imprégner le support au moyen d'une solution renfermant à la fois

α/ le ou les métaux de la famille du groupe VIII (acide hexachloroplatinique par exemple),

β/ le ou les métaux autres que ceux du groupe VIII (par exemple un chlorure, un bromure, un fluorure, un sulfate ou un acétate de métal choisi ou encore tout autre sel du métal choisi soluble dans l'eau ou l'acide chlorydrique ou autre solvant approprié (chloroplatinate, acétylacétonate par exemple) et

γ/ éventuellement, du chlore ou du fluor.

Une autre méthode encore, consiste à introduire les éléments métalliques en effectuant autant d'imprégnations successives qu'il y a d'éléments métalliques dans le catalyseur ; par exemple, on introduit :

- d'abord un métal du groupe VIII au moyen d'une solution le contenant, cette étape étant suivie ou non d'un séchage et d'une calcination,

- puis le ou les autres métaux du groupe VIII (si le catalyseur en comporte plusieurs) au moyen d'une solution le ou les contenant ;

- et enfin, le ou les autres métaux additionnels, cette dernière imprégnation étant suivie de séchage et calcination à une température comprise, par exemple, entre environ 400 et 1200°C.

Il est bien entendu que l'ordre des imprégnations donné ci-dessus n'est pas obligatoire et peut être différent.

(2) - soit par cogélification entre la poudre d'alumine constituant le liant et la phase active introduite sous forme de suspension colloïdale.

(3) - soit lors de la fabrication du liant par coprécipitation entre un sel d'alumine et un sel de la phase active ; le liant est séché avantageusement à une température inférieure à 300° C.

A l'issue de ces techniques, on mélange le liant et la charge.

Technique II :

Si l'on ajoute la phase active, en majeure partie dans la charge, (avant de mélanger la charge avec le liant), on procède comme précédemment par imprégnation ou cogélification ou coprécipitation. Toutefois, la charge peut en outre subir une calcination entre 300 et 1000°C environ.

A l'issue de ces techniques, on mélange le liant et la charge.

Technique III :

Si l'on ajoute la phase active pendant le mélange de la charge et du liant, avec introduction préférentielle de la phase active dans le liant ou dans la charge, on peut opérer

(a) en plusieurs étapes,

ou (b) en une seule étape.

(a) en plusieurs étapes :

Si l'on désire introduire la phase active préférentiellement dans le liant, la méthode consiste à introduire d'abord le liant en solution aqueuse, puis un sel de la phase active puis la

charge saturée au préalable par un sel adéquat de façon à ce que le sel de la phase active ne pénètre pas dans la charge (le sel permettant ainsi d'inhiber la charge peut être, par exemple, un sel volatil tel qu'un nitrate, un chlorure, un sulfate, un sel d'ammonium, une amine, une hydroxylamine, un chlorure d'hydroxylamine, un acétate d'ammonium etc...).

Si l'on désire introduire la phase active préférentiellement dans la charge, la méthode consiste à introduire la charge, puis la ou les sels de la phase active puis le liant inhibé par un sel comme décrit ci-dessus.

(b) en une seule étape :

Pour introduire préférentiellement la phase active dans le liant ou dans la charge, on inhibe soit la charge soit le liant, comme indiqué ci-dessus au moyen d'un sel adéquat, la phase active se fixant ainsi, soit dans le liant si la charge est inhibée, soit dans la charge si le liant est inhibé.

Pour introduire préférentiellement la phase active dans le liant, on peut également utiliser un liant de surface spécifique comprise entre environ 150 et 600 m2/g et une charge de surface spécifique quelconque mais telle que le rapport des surfaces spécifiques du liant et de la charge soit supérieur à 1,5 environ. Dans ce cas, le sel de la phase active se fixe de préférence sur le liant.

Inversement pour introduire préférentiellement la phase active dans la charge, on peut également utiliser une charge de surface spécifique comprise entre environ 100 et 600 m2/g, le liant ayant une surface spécifique telle que le rapport des surfaces spécifiques de la charge et du liant soit supérieur à 1,5 environ.

Si la phase active renferme plusieurs métaux, il est possible d'introduire séparément chacun des métaux dans le liant ou dans la charge par l'une ou l'autre de toutes les méthodes décrites précédemment.

Quelles que soient les 3 techniques utilisées, (technique I ou technique II ou technique III), les méthodes de mélange et de mise en forme de la charge et du liant sont réalisées de préférence :

(a) soit par extrusion,
(b) soit par méthode dite du drageoir tournant (ou bol tournant, ou granulation tournant, etc...),
(c) soit par la méthode dite de la goutte d'huile (ou dégouttage dans l'huile).

Ensuite on pourra ajouter après la mise en forme du support selon l'une des 3 méthodes ci-dessus, la partie éventuelle de phase active non encore introduite dans la masse catalytique.

D'une façon générale, on a constaté que l'introduction de la phase active, ou d'une partie de celle-ci, dans la charge conférait au catalyseur fini des propriétés catalytiques améliorées (sélectivité, rendement) et on a constaté que l'introduction de la phase active, ou d'une partie de celle-ci, dans le liant, conférait au catalyseur fini une solidité mécanique plus élevée qu'à l'habitude donc une durée de vie plus longue.

Ces catalyseurs trouvent une application dans les réactions de conversion d'hydrocarbures énumérées plus haut et en particulier

- pour les réactions de méthanisation à l'aide de catalyseurs du type nickel et/ou molybdène renfermant éventuellement au moins un métal de la famille des terre-rares,
- pour les réactions d'hydrotraitement (hydrodésulfuration, hydrodémétallisation, etc...),
- pour les réactions dites de post combustion,
- pour les réactions de reformage catalytique ou encore pour les réactions d'aromatisation d'hydrocarbures,
- pour les réactions d'hydrogènation d'hydrocarbures.

Donc, selon l'invention, le support du catalyseur, à base d'alumine, sur lequel on se propose d'ajouter une phase active constituée par exemple d'au moins un métal du groupe VIII de la classification périodique des éléments (et par exemple du cobalt, du fer, du nickel ou un métal noble de la famille du platine) est préparé, par exemple et de préférence soit par une méthode d'extrusion, soit par une méthode dite de drageoir ou granulateur tournant (ou méthode équivalente telle que bol tournant, etc...), soit encore par la méthode dite de dégouttage dans l'huile, la méthode de fabrication étant caractérisée en ce que une partie au moins de la phase active est ajoutée, soit dans la charge, soit dans le liant, soit à la fois dans la charge et dans le liant.

Généralement, la phase active renferme d'une part au moins un métal du groupe VIII et d'autre part au moins un métal promoteur ;on peut alors envisager trois méthodes préférées pour la mise en forme du liant et/ou de la charge et de ladite partie de phase active au cours de la fabrication du support, selon que ladite partie de la phase active est le métal VIII et/ou le métal promoteur.

Dans la suite de cette description, on utilisera les termes "majeure partie de l'oxyde" du promoteur utilisé (ou des oxydes des promoteurs utilisés, s'il y en a plusieurs) ou "majeure partie du métal du groupe VIII (ou des métaux du groupe VIII s'il y en a plusieurs dans le catalyseur). Par "majeure partie" on entend au moins 55%, en poids, de la totalité de l'oxyde, (ou des oxydes, s'il y en a plusieurs) ou 55%, en poids, de la totalité du métal du groupe VIII, sous forme métallique (ou des métaux du groupe VIII s'il y en a plusieurs) présent dans le catalyseur fini, c'est-à-dire, dans le catalyseur prêt à l'emploi.

On rappelle que si tout l'oxyde ou les oxydes métalliques promoteurs et/ou si tout le métal ou les métaux du groupe VIII n'ont pas été introduits par la méthode indiquée, cela signifie d'une part que ce ou ces oxydes promoteurs non introduits par la méthode indiquée, sont introduits dans la charge ou ultérieurement (c'est-à-dire après la

fabrication du support) et par toute méthode adéquate, et d'autre part que ce ou ces métaux du groupe VIII, non introduits par la méthode indiquée, sont introduits dans la charge ou ultérieurement (c'est-à-dire après la fabrication du support et par toute méthode adéquate).

Pour la mise en forme du support, c'est-à-dire soit pour mélanger le liant et la charge, le liant ou la charge renfermant à ce stade déjà une partie de la phase active (technique I ou technique II), soit pour mélanger le liant et la charge, une partie de la phase active étant simultanément ajoutée préférentiellement dans le liant ou dans la charge, pendant ce mélange, (technique III) on envisagera diverses techniques :

I/ La méthode de mise en forme du mélange charge-liant est celle de la goutte d'huile. Le métal du groupe VIII peut être introduit dans la charge ou dans le liant. Mais, il est possible également de l'ajouter plus tard (c'est-à-dire, après la préparation du support mélangé à une partie dela phase active, conformément à l'invention) par toute méthode adéquate et conventionnelle, par exemple par imprégnation. Le métal dit promoteur ou additionnel, généralement introduit sous la forme de l'un de ses oxydes, est ajouté soit dans le liant soit dans la charge, soit à la fois dans le liant et dans la charge, soit également, quoique généralement/ mineure partie, à l'issue de la préparation du mélange support-phase active, par toute méthode adéquate, par exemple par imprégnation.

D'une façon préférée, on distingue six méthodes opératoires n° 1 à 6 :

Méthode 1 : La majeure partie de l'oxyde ou des oxydes métalliques promoteurs est introduite dans le liant et une partie au moins, par exemple, la majeure partie du ou des métaux du groupe VIII est introduite dans le liant.

Cette méthode vaut pour l'ajout de phase active dans le liant selon la technique III (lorsque l'ajout de phase active dans le liant est fait pendant le mélange liant-charge) et selon la technique I (ajout de phase active dans le liant avant le mélange liant-charge).

Méthode 2 : La majeure partie de l'oxyde ou des oxydes métalliques promoteurs est introduite dans la charge et une partie au moins par exemple la majeure partie du ou des métaux du groupe VIII est introduite dans le liant. A remarquer que le ou les oxydes de métaux promoteurs et le ou les métaux du groupe VIII éventuellement non introduits comme indiqué ci-dessus, sont introduits pour ce qui concerne l'oxyde ou les oxydes de métaux promoteurs, dans le liant ou après la fabrication du support et, pour ce qui concerne le ou les métaux du groupe VIII, dans la charge ou après la fabrication du catalyseur.

Ce type de remarque fait pour la méthode 1 et pour la méthode 2 est valable pour les autres méthodes 3 à 6 et ne sera donc pas répété dans la suite de cette description, étant ainsi entendu que dans l'éventualité où une mineure portion de ou des oxydes promoteurs ou du ou des métaux du groupe VIII n'est pas introduite conformément à la méthode indiquée, ce ou ces mineures portions sont alors introduites par toute autre voie.

Cette méthode vaut pour les 3 techniques :

- Technique I (ajout d'une partie de la phase active dans le liant, la charge étant ajoutée ultérieurement),
- Technique II (ajout d'une partie de la phase active dans la charge, le liant étant ajouté ultérieurement),
- Techique III (ajout de la phase active dans la charge ou le liant pendant le mélange liant-charge).

<u>Méthode 3</u> : La majeure partie de l'oxyde ou des oxydes métalliques promoteurs est introduite dans le liant et une partie au moins, par exemple la majeure partie du ou des métaux du groupe VIII est introduite dans la charge.

Cette méthode vaut également pour les 3 techniques :

- Technique I (ajout d'une partie de la phase active dans le liant, la charge étant ajoutée ultérieurement),
- Technique II (ajout d'une partie de la phase active dans la charge, le liant étant ajouté ultérieurement)
- Technique III (ajout de la phase active dans le liant ou la charge pendant le mélange liant-charge).

<u>Méthode 4</u> : La majeure partie de l'oxyde ou des oxydes métalliques promoteurs est introduite dans la charge et une partie au moins, par exemple la majeure partie du ou des métaux du groupe VIII est introduite dans la charge.

Cette méthode vaut pour la technique III (lorsque l'ajout de phase active dans la charge est fait pendant le mélange charge-liant) et pour la technique I (ajout de phase active dans la charge avant le mélange charge-liant).

<u>Méthode 5</u> : La majeure partie du ou des oxydes promoteurs est introduite dans le liant et le ou les métaux du groupe VIII sont introduits ultérieurement après la fabrication du support, par exemple par imprégnation classique.

La méthode vaut pour la technique I et la technique III.

<u>Méthode 6</u> : La majeure partie du ou des oxydes promoteurs est introduite dans la charge et le ou les métaux du groupe VIII sont introduits ultérieurement après la fabrication du support, par exemple par imprégnation classique.

La méthode vaut pour la technique II et la technique III.

II/ Le mélange est obtenu par une méthode de type drageoir tournant.

Dans ce cas, deux méthodes N° 7 et 8 sont essentiellement retenues pour l'introduction de ladite partie au moins de la phase active dans le support :

Une première méthode (N° 7) consiste à introduire la majeure partie du ou des oxydes de métaux (dits promoteurs) dans le liant, (selon les "techniques I ou III). Une deuxième méthode (N° 8) consiste à introduire une partie au moins et par exemple la majeure partie du ou des oxydes de métaux promoteurs dans la charge (selon les "techniques" II ou III). Pour ces deux méthodes, la totalité du ou des métaux du groupe VIII est introduite de préférence ultérieurement, après la préparation du support, par exemple par imprégnation.

III/ Le mélange support-phase active est obtenu par une méthode de type extrusion.

Plusieurs méthodes sont possibles qui sont les six mêmes méthode 1 à 6 décrites pour la technique de la goutte d'huile (dégouttage dans l'huile).
De façon préférée, on procèdera ainsi à l'incorporation des métaux en utilisant par exemple l'un ou l'autre des procédés suivants, les 4 derniers procédés étant les plus particulièrement appréciés :

- Procédé selon la technique I dans lequel on utilise la méthode de la goutte d'huile ou d'extrusion et dans lequel la totalité du ou des métaux additionnels est ajoutée dans le liant, le ou les métaux VIII étant introduits soit dans le liant (méthode 1) soit dans la charge (méthode 3).

- Procédé selon la technique II dans lequel on utilise la méthode de la goutte d'huile ou d'extrusion, dans lequel la totalité du ou des métaux additionnels est introduite dans la charge, le ou les métaux VIII étant introduits soit dans la charge (méthode 4) soit dans le liant (méthode 2).

- Procédé selon la technique I dans lequel on utilise la méthode de la goutte d'huile ou d'extrusion, dans lequel la totalité du ou des métaux additionnels est introduite dans le liant, le ou les métaux VIII étant introduits ultérieurement sur le support (méthode 5).

- Procédé selon la technique II dans lequel on utilise la méthode de la goutte d'huile ou d'extrusion, dans lequel la totalité du ou des métaux additionnels est introduite dans la charge, le ou les métaux VIII étant ajoutés après la mise en forme du support (méthode 6).

- Procédé selon la technique I dans lequel on utilise la méthode du drageoir tournant et dans lequel le ou les métaux additionnels sont introduits dans le liant, le ou les métaux VIII étant ajoutés après la mise en forme du support (méthode 7).

- Procédé selon la technique II dans lequel on utilise la méthode du drageoir tournant et dans lequel le ou les métaux additionnels sont introduits dans la charge, le métal VIII étant introduit ultérieurement dans le support (méthode 8).

- Procédé selon la technique III, dans lequel on utilise la méthode de la goutte d'huile ou d'extrusion, et dans lequel le ou les métaux additionnels sont introduits dans le liant, le ou les métaux VIII étant introduits dans le liant (méthode 1) ou dans la charge (méthode 3)

- Procédé selon la technique III, dans lequel on utilise la méthode de la goutte d'huile ou d'extrusion, et dans lequel le ou les métaux

additionnels sont introduits dans la charge, le ou les métaux VIII étant introduits dans le liant (méthode 2) ou dans la charge (méthode 4).

- Procédé selon la technique III dans lequel on utilise la méthode de la goutte d'huile ou d'extrusion et dans lequel le ou les métaux additionnels sont soit introduits dans le liant (méthode 5) soit introduits dans la charge (méthode 6), le ou les métaux VIII étant introduits ultérieurement dans le support.

- Procédé selon la technique III, dans lequel on utilise la méthode du drageoir tournant et dans lequel le ou les métaux additionnels sont introduits dans la charge (méthode 8) ou dans le liant (méthode 7), le ou les métaux VIII étant introduits ultérieurement dans le support.

Parmi les utilisations du catalyseur préparé selon la présente invention, on citera de préférence, parmi les réactions déja énumérées ci-dessus :

a) La méthanisation avec notamment un catalyseur à base de nickel et de tungstène ou de molybdène, renfermant également de préférence au moins un métal du groupe des terres-rares. On préfère généralement introduire le ou les métaux promoteurs dans la charge. Les catalyseurs de méthanisation sont préparés selon l'une ou l'autre des diverses méthodes indiquées.

également/

b) le réformage et/les réactions de production d'hydrocarbures aromatiques, avec des catalyseurs dont la mise en forme a été effectuée conformément à l'invention -soit par la méthode "drageoir tournant"
-soit par la méthode "extrusion"
-soit de préférence par la méthode "goutte d'huile".

c) le post combustion avec des catalyseurs dont la mise en forme a été effectuée conformément à l'invention,
- soit par la méthode "drageoir-tournant"
- soit par la méthode "extrusion"
- soit de préférence par la méthode "goutte d'huile".

d) l'hydrotraitement avec des catalyseurs dont la mise en forme a été effectuée conformément a l'invention :
- soit par la méthode "goutte d'huile"
- soit de préférence par la méthode "drageoir tournant" ou par la méthode "extrusion".

e) l'hydrogénation des composés insaturés d'une charge d'hydrocarbures.

En ce qui concerne plus particulièrement la méthode de dégouttage dans l'huile, on peut procéder de préférence de la façon suivante :

Selon un premier procédé, des gouttes de liant et de charge sont introduites dans un liquide non miscible à l'eau de telle façon que les gouttes forment des particules sensiblement sphériques, ces particules sont coagulées simultanément et/ou postérieurement à la mise en forme sphéroïdale par un agent gélifiant qui enlève les ligands stabilisants. Simultanément également est ajoutée au moins une partie de la phase active du catalyseur, soit dans le liant, soit dans la charge, soit à la fois dans la charge et le liant.

Le liquide non miscible à l'eau peut être tel que les gouttes chutent (densité du liquide inférieure a la densité des gouttes) ou montent (densité du liquide supérieure à la densité des gouttes) dans le liquide de traitement ; comme exemple de liquides non miscibles à l'eau convenant aux fins du procédé de l'invention, on peut citer notamment le pétrole, le kérosène, le dodécylbenzène, le trichloréthylène, le perchloréthylène, les solvants organiques, les hydrocarbures et les huiles minérales en général.

L'agent gélifiant qui enlève les ligands stabilisants peut notamment être l'ammoniac, l'ammoniaque, le carbonate d'ammonium, les amines à longue chaîne (notamment celles commercialisées sous la marque Primène), l'hexaméthylène tétramine, l'urée.

Les gouttes ainsi traitées sont récupérées de leur milieu de mise en forme et/ou de coagulation.

Selon un mode de mise en oeuvre préféré de l'invention, des gouttes du mélange sont introduites dans une colonne contenant une phase supérieure constituée par du pétrole et une phase aqueuse inférieure constituée par une solution d'ammoniaque. La mise en forme s'effectue dans la phase supérieure et la gélification essentiellement dans la phase inférieure. La température du pétrole est généralement voisine de la température ambiante. La solution d'ammoniaque doit avoir son pH maintenu au-dessus d'environ 9. Le temps de séjour des gouttes dans l'ammoniaque est de quelques minutes et généralement inférieur a environ 15 minutes. Dans ces conditions, les billes recueillies sont suffisamment solides et ne sont pas déformées lors des manipulations subséquentes. Deux nouveaux avantages du procédé selon l'invention apparaissent notamment pour cette étape de mise en forme sphéroïdale et de gélification : la mise en forme s'effectue à température ambiante et par ailleurs la gélification s'opère très rapidement, ainsi, il n'est absolument pas nécessaire selon ce procédé d'opérer un vieillissement subséquent des billes dans une solution basique, celles-ci présentant une solidité suffisante, après un court temps de séjour dans la phase ammoniacale.

Selon un second procédé, des gouttes du mélange sont introduites (mises en suspension) dans un liquide non miscible, susceptible d'enlever l'eau des gouttes. Ce liquide non miscible extrait l'eau des gouttes et cause la gélification de celles-ci sous forme sphéroïdales, on peut utiliser par exemple le 2-éthyl-1-hexanol ou un alcool aliphatique à longue chaine commercialisé sous la marque Octylol.

Selon un troisième procédé, on mélange le mélange avec au moins un monomère hydrosoluble dont le polymère non réticulé est soluble dans l'eau ou forme un gel, on disperse ensuite le mélange obtenu sous formes de gouttes dans un milieu fluide chaud où se

produit une polymérisation substantielle du monomère. Le monomère peut être un composé acrylique de formule générale

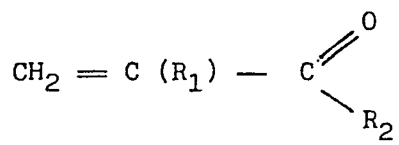

dans laquelle $R_1$ est H ou le radical méthyle, $R_2$ est un radical O $R_3$ ou N $R_3R_4$, où $R_3$ et $R_4$ représentent H ou un radical hydrophyle, notamment un radical hydroxyalkyle contenant en particulier de 1 à 2 atomes de carbone ou un radical méthoxyméthyle. Les principales étapes de ce procédé ont notamment été décrites dans les brevets français n° 2 261 056 et 2 261 057.

Quel que soit le procédé utilisé, les billes obtenues sont ensuite séparées de leur milieu de gélification puis séchées et calcinées à une température comprise entre environ 550 et 1100° C.

Les billes obtenues présentent un volume poreux total compris entre environ 0,30 et 1,7 cm3/g ; leur volume microporeux (constitué par les pores de diamètre inférieur à 0,06 microns), étant compris entre environ 0,5 et 1 cm3/g, leur volume macroporeux (constitué par les pores de diamètre supérieur à 0,06 microns) étant compris entre environ 0,05 et 0,7 cm3/g; le diamètre moyen des macropores étant compris entre 0,1 et 10 microns ; la surface spécifique de ces billes étant comprise entre environ 80 et 350 m2/g (méthode BET produits séchés à 110° C), leur résistance à la rupture étant supérieure à 1 kg.

En ce qui concerne plus particulièrement la méthode d'extrusion ou la méthode du granulateur tournant, la préparation du catalyseur est effectuée plus particulièrement comme suit :

1/ au cours d'une éventuelle première étape, le matériel utilisé comme support est lavé.

2/ Au cours d'une deuxième étape, le matériel utilisé comme support est séché par toute méthode adéquate comme, par exemple à l'étuve, de façon à obtenir une poudre qui conserve la même structure que le matériel de départ, et qui après séchage, est caractérisée par une perte au feu de l'ordre de 15 à 40 %, par rapport à 1000°C.

3/ Au cours d'une éventuelle troisième étape, le matériel est lavé, puis séché.

4/ A ce stade, avant la suite des autres étapes, il est souvent préférable de calciner au moins partiellement la poudre séchée. Ainsi on peut soumettre, à une température comprise entre environ 200 et 800°C, 20 à 80 % de la poudre d'alumine et mélanger la poudre calcinée à la poudre non calcinée. L'avantage est ici de pouvoir conférer à l'aide de produits biphasés une macroporosité dans les produits que l'on cherche à obtenir. Plus précisément, on cherche ici, à obtenir, après mélange de la poudre calcinée et de la poudre non calcinée, une poudre qui se caractérise par des grains possédant un diamètre de particules de l'ordre de 1 à 50 microns et de macroporosité critique à savoir une macroporosité, dans les pores, de diamètre supérieur à environ 600 Å.

5/ On pratique ensuite la mise en forme de la poudre obtenue, a) soit par extrusion, b) soit au moyen d'un drageoir tournant ou d'un moyen équivalent, cette mise en forme étant caractérisée par l'ajout simultané d'une partie au moins de la phase active au niveau du liant (alumine dispersée) ou au niveau de la charge (alumine non dispersée).

Si l'on opère par extrusion, on procède de la façon suivante : pendant une durée comprise entre environ cinq minutes et cinq heures, on malaxe la poudre en présence d'eau ou d'eau acidulée, l'eau ou l'eau acidulée renfermant au moins en partie la phase active du catalyseur (c'est-à-dire les oxydes de métaux et/ou les métaux précieux).

On utilise une quantité d'eau, ou une quantité d'eau acidulée qui représente en poids 50 % à 89 % par rapport à la masse de la poudre.

La pâte obtenue est extrudée par toute méthode adéquate, par exemple sur extrudeuse mono vis ou double vis ou de toute autre conception, au travers d'une filière.

Les extrudés obtenus sont séchés à une température généralement inférieure à 350° C, de façon à ce que la perte au feu des solides obtenus soit de l'ordre de 15 à 40 %.

C'est à ce stade qu'on introduit éventuellement et conventionnellement la partie de la phase active qui n'a pas encore été mélangée au support et l'on peut terminer par un séchage, par exemple à une température inférieure à 350° C.

Eventuellement ensuite, les extrudés sont soumis à un traitement hydrothermique en milieu neutre ou acide ou basique à une température comprise entre 80 et 500° C, en vue de faire évoluer les structures amorphes en structure boehmite ou pseudoboehmite et d'améliorer les propriétés mécaniques.

On procède à la calcination des extrudés obtenus, à une température généralement comprise entre 350 à 1000° C.

L'ordre de ces deux dernières étapes peut être inversé.

Si l'on opère par la méthode du granulateur tournant ou similaire (drageoir ou autre : assiette tournante, bol tournant, etc... ("rotary ball")) on procède comme suit : d'une part on fait couler la poudre sur le granulateur et d'autre part, on introduit simultanément sur le granulateur soit en la versant soit en la pulvérisant, une solution aqueuse ou une solution aqueuse acidulée qui renferme au moins en partie la phase active du catalyseur (c'est-à-dire les oxydes de métaux et/ou les métaux précieux). Généralement, on

mouille le drageoir ou le granulateur, pendant que la poudre tourne. La poudre grossit par collage des particules de poudre qui sont présentes. On enlève les particules selon les méthodes habituelles, par exemple en les éjectant d'un drageoir par centrifugation puis on les sèche et on les calcine comme expliqué plus haut pour la méthode dite d'extrusion (avec introduction éventuelle, comme expliqué ci-dessus, de la partie de la phase active qui n'a pas encore été introduite sur le support).

Un perfectionnement de la méthode consisterait à envoyer sur le granulateur, une partie de la poudre (environ 0 à 40 % de cette poudre) déjà diluée dans la solution aqueuse ou mieux dans la solution aqueuse acidulée. (On peut ainsi diluer une partie de la poudre dans l'acide à l'aide duquel on disperse ladite solution aqueuse acidulée).

Les catalyseurs préparés selon l'invention sont utilisables en particulier dans les réactions d'hydrogénation des hydrocarbures et de l'oxyde de carbone.

Les catalyseurs selon l'invention sont ainsi utilisables notamment dans les procédés d'hydrogénation sélective des hydrocarbures acétyléniques contenus dans un mélange d'hydrocarbures renfermant des hydrocarbures dioléfiniques.

Les procédés de conversion d'hydrocarbures à haute température tels que par exemple, le steam-cracking, produisent des hydrocarbures insaturés tels que par exemple l'éthylène, le propylène, le butadiène, les butènes, ainsi que des hydrocarbures bouillant dans la gamme des essences ; les hydrocarbures gazeux oléfiniques et dioléfiniques de deux à quatre atomes de carbone obtenus par ce procédé, contiennent également une certaine quantité d'hydrocarbures acétyléniques. La teneur en ces hydrocarbures varie en fonction de la sévérité du traitement de conversion mais est toujours trop faible pour que l'on envisage de les séparer et de les utiliser comme tels pour la pétrochimie. Cependant leur présence à côté des hydrocarbures oléfiniques et dioléfiniques rend difficile, voire impossible, l'utilisation de ces dernierspour la pétrochimie. C'est par exemple, le cas pour le butadiène dont on doit éliminer autant que possible le vinylacétylène et les butynes si on veut le rendre apte à la production d'élastomère.

Pour éliminer ces hydrocarbures acétyléniques, on a proposé, antérieurement divers procédés de séparation tels que, par exemple la distillation extractive qui permet de séparer les hydrocarbures selon leur degré d'insaturation ou encore des procédés consistant à hydrogéner sélectivement les composés acétyléniques contenus dans la charge, par exemple une coupe $C_4$ brute de steam-cracking, en présence d'un catalyseur à base d'un support d'alumine renfermant un métal noble (le palladium par exemple) et un autre métal promoteur appartenant généralement au groupe VI de la classification périodique, avec des conditions opératoires qui sont généralement les suivantes :

- pression totale : 1 à 50 bars et de préférence 3 à 10 bars
- vitesse spatiale : 1 à 50 bars et de préférence 10 à 50 bars (volume de charge liquide/volume de catalyseur/heure)
- température : 0 à 100° C et de préférence 10 a 50° C
- Rapport $H_2$/composés acétyléniques en mole/mole : 1 à 5 et de préférence 1,1 à 2.

Les catalyseurs selon l'invention sont utilisables également notamment dans les procédés d'hydrogénation sélective des essences de pyrolyse, riches en composés sulfurés et particulièrement en composés sulfurés acides tels que les thiols, ce catalyseur comportant au moins un métal du groupe VIII et un métal du groupe VI A déposés sur un support d'alumine de transition.

On sait que les produits de pyrolyse comme par exemple les gas-oils, les kérosènes, et en particulier les essences de pyrolyse, c'est-à-dire les essences provenant d'unités de steam cracking, coking, visbreaking etc... contiennent des composés fortement insaturés tels que les hydrocarbures dioléfiniques et styréniques, par exemple, qui ont tendance à former des gommes et rendent ces essences impropres à toute utilisation ultérieure. Un certain nombre de ces essences telles que celles provenant de coking, visbreaking, et de steam-cracking de coupes lourdes telles que notamment les gas-oils, comportent de fortes teneurs en composés sulfurés (jusqu'à 5000 ppm calculé en poids de soufre) une proportion non négligeable de ces corps se trouvant sous forme de mercaptans (parfois jusqu'à environ 1000 ppm).

De façon générale, ces diverses essences de pyrolyse sont rendues valorisables par hydrogénation sélective des composés dioléfiniques et styréniques en mono-oléfines et alkylaromatiques correspondants. De nombreux procédés ont été décrits pour le traitement d'essences provenant de steam cracking de naphta. Ces procédés peuvent utiliser des catalyseurs à base de nickel ou de cobalt renfermant également un métal du groupe VI A agissant à l'état sulfuré.

Généralement, dans l'art antérieur, pour préparer un catalyseur à base d'alumine, d'un métal du groupe VIII et d'un métal promoteur, on part d'un support consistant en une alumine de transition se présentant par exemple sous forme de billes, extrudés, concassés, pastilles etc... avec une surface spécifique comprise entre 120 et

500 m2/g et un volume poreux totale compris entre 0,2 et 0,9 cm3/g. Cette alumine est alors imprégnée au moyen d'une solution d'un sel soluble par exemple de nickel ou de cobalt choisi généralement parmi les nitrates, chlorures, formiates etc ... de manière à avoir sur le support ainsi imprégné de 1 à 10 % en poids de nickel ou de cobalt calculé sous forme d'oxyde. Le solide ainsi obtenu est ensuite séché puis calciné en présence d'air, par exemple sous une atmosphère d'air ou sous un courant de celui-ci, à une température comprise avantageusement entre 700 et 850° C par exemple pendant une durée de 1 à 6 heures. Après refroidissement on incorpore de toute manière convenable, par exemple par imprégnation, malaxage ou coprécipitation, un composé, par exemple un sel, de métal du groupe VI A tel que par exemple un molybdate ou un tungstate d'ammonium. Le pourcentage pondéral total des oxydes de métaux déposés, (NiO ou CoO, $MoO_3$ ou $WO_3$) est de préférence compris entre 5 et 30 %. Les proportions relatives des oxydes ou sulfures des métaux des groupes VI et VIII peuvent être par exemple les suivantes : pour les oxydes de métaux du groupe VIII entre 10 et 50 % en poids, pour les oxydes de métaux du groupe VI A entre 50 et 90 % en poids. Le catalyseur ainsi obtenu est ensuite séché puis calciné à une température comprise par exemple entre 400 et 600° C. Pour être utilisé dans l'hydrogénation, le catalyseur doit encore subir une présulfuration qui se fait généralement in situ. Ce prétraitement peut se faire en utilisant un courant gazeux contenant à côté de l'hydrogène, et/ou un gaz inerte tel que par exemple de l'azote ou du méthane, de 1 à 10 % en volume d'hydrogène sulfuré, à une température comprise entre 200° C et 500° C pendant une durée suffisante pour transformer la majeure partie au moins des oxydes des métaux du groupe VIII et du groupe VI A en sulfures correspondant c'est-à-dire par exemple NiO et CoO en $Ni_3S_2$ et $Co_9S_8$ et $MoO_3$ et $WO_3$ en $MoS_2$ et $WS_2$.

Le catalyseur fini aura une surface spécifique généralement inférieure à celle de l'alumine de départ. La surface spécifique du catalyseur fini est de préférence comprise entre 120 et 300 m2/g. Les conditions opératoires de l'hydrogénation sont choisies de manière à assurer une hydrogénation pratiquement complète des hydrocarbures dioléfiniques et des hydrocarbures styréniques tout en évitant la polymérisation et le dépôt de gommes formées à partir de ceux-ci. La pression totale est généralement comprise entre 20 et 60 kg/cm2 ; la température entre 50 et 250° C, la VVH (vitesse spatiale = débit liquide horaire en volume par unité de volume de catalyseur) entre 0,5 et 5 et de préférence entre 1 et 2,5 et le débit d'hydrogène par rapport à la charge entre 0,2 et 2 moles par mole de charge liquide On opère avec un ou plusieurs lits fixes de catalyseur. Les conditions opératoires comme on le voit permettent de maintenir la majeure partie de la charge en phase liquide ce qui entraîne un meilleur lavage des gommes pouvant se trouver dans l'essence ou formées éventuellement dans le réacteur.

Les catalyseurs préparés selon l'invention conviennent en particulier également pour les réactions catalytiques rapides et fortement exothermiques entre deux ou plusieurs composés gazeux, avec production de gaz riches en méthane. Un exemple typique d'une telle réaction est celle qui conduit à la formation de méthane (méthanisation) à partir d'un mélange de CO et de $H_2$ d'après la stoéchiométrie globale :

$$CO + 3\ H_2 \rightleftharpoons CH_4 + H_2O$$

ou celle qui conduit à la formation d'alcools, en particulier de méthanol selon la stoéchiométrie globale :

$$CO + 2\ H_2 \rightleftharpoons CH_3\ OH$$

ou encore la synthèse d'hydrocarbures plus lourds que le méthane.

Ces réactions sont fortement exothermiques (la montée adiabatique de température pour la synthèse du méthane est de l'ordre de 17° C par pourcent de conversion).

Il est connu depuis longtemps que la mise en contact d'oxyde de carbone et d'hydrogène avec un catalyseur à base de nickel fournit du méthane avec une bonne sélectivité. Cette réaction a été appliquée jusqu'à présent plus particulièrement à l'élimination des faibles quantités d'oxyde de carbone, de l'ordre de 1 %, restant dans l'hydrogène, après la synthèse de celui-ci par steam-reforming ou par oxydation partielle d'une fraction hydrocarbonée.

Cependant, dans la perspective d'une pénurie possible des ressources énergétiques, la fabrication de méthane en tant que substitut du gaz naturel présente un regain d'intérêt et l'on peut concevoir des concentrations de 10 à 40 % ou plus en CO dans l'hydrogène.

Donc, la principale difficulté à surmonter dans la mise en oeuvre de la réaction entre l'oxyde de carbone et l'hydrogène est l'évacuation des calories produites par cette transformation fortement exothermique.

L'utilisation classique de catalyseurs hétérogènes en lits fixes n'était favorable à un bon échange thermique, en raison du risque de conduire à des surchauffes locales nuisibles à l'activité

et à la durée de vie du catalyseur.

On a néanmoins perfectionné le procédé de méthanisation en mettant en oeuvre une substance diluante, associée ou non à un échange thermique à travers la paroi du réacteur. Plusieurs procédés ont été ainsi élaborés utilisant comme diluant soit le mélange gazeux de sortie qui est alors partiellement recyclé avec ou sans injection de vapeur d'eau, soit un liquide, par exemple un hydrocarbure qui, aux conditions de fonctionnement du réacteur, peut évacuer les calories par chaleur sensible et par évaporation.

Un fort taux de recyclage du liquide et de la vapeur condensée permet d'assurer la stabilité thermique du réacteur.

Dans les procédés faisant appel a un liquide, le catalyseur est habituellement utilisé soit sous forme de suspension de fines particules, soit sous la forme de particules immobilisées dans un lit fixe ou en lit bouillonnant.

Il est important que le catalyseur baigne dans le liquide pour assurer partout un bon contact liquide-solide. Ce faisant, on évite l'apparition d'une zone sèche dans le réacteur, laquelle zone pourrait être responsable d'un manque de stabilité thermique. cette zone sèche pouvant atteindre des températures très élevées du fait de la réaction qui peut se dérouler entièrement en phase gazeuse à cet endroit. Aussi a-t-on proposé diverses techniques, utilisant une phase liquide continue, circulant de bas en haut, le catalyseur pouvant être utilisé sous forme de suspension, sous forme de lit bouillonnant ou sous forme de lit fixe ou mobile. Ces techniques présentent toutefois de graves inconvénients : en particulier les problèmes d'attrition du catalyseur, dûs au déplacement des particules de catalyseur, ne sont pas négligeables, même s'il s'agit d'un lit dit fixe ; des particules fines de catalyseur peuvent être entraînées hors de la zone réactionnelle, provoquant des emballements de la réaction dans les séparateurs, les échangeurs ou ailleurs dans l'installation ;

enfin la productivité du lit catalytique est relativement réduite. Or la méthode de fabrication de catalyseurs selon l'invention remédie partiellement au moins à ces inconvénients.

Le diluant est un liquide qui, dans les conditions de la réaction, ne prend pas part sensiblement à cette dernière et n'a pas d'effet néfaste sur le catalyseur ; c'est de préférence un hydrocarbure ou une fraction d'hydrocarbures (coupe pétrolière). Ce peut être, par exemple, une coupe gazole, une coupe fuel, une cire de paraffine fondue, une huile aromatique, une huile de silicone ou un polymère liquide de tétrafluoréthylène.

Les liquides ainsi utilisés ont habituellement une densité de 0,4 à 2 g/cm3 et une viscosité de 0,05 à 10 centipoises (0,05 à 10 mPa.s) dans les conditions de la réaction, ces valeurs étant indicatives et non impératives.

Bien que la stoéchiométrie de la réaction soit de 3 moles $H_2$ pour une mole CO (synthèse du méthane) ou 2 moles $H_2$ pour une mole de CO (synthèse du méthanol), on peut opérer avec des rapports différents. En particulier, en cas d'emploi d'un défaut d'hydrogène, l'eau formée peut réagir avec le monoxyde de carbone excédentaire en fournissant de l'hydrogène, selon la réaction bien connue $CO + H_2O \rightleftharpoons CO_2 + H_2$

On pourra donc utiliser, par exemple, de 1,5 à 4 moles d'hydrogène par mole de monoxyde de carbone.

La température et la pression sont choisies dans les domaines habituels, en fonction du catalyseur et de la réaction choisie. Les températures sont le plus souvent entre 200 et 400° C et les pressions entre 1 et 40 MPa.

On utilise un catalyseur à support d'alumine, possédant comme agent hydrogénolysant, un ou plusieurs métaux du groupe VIII

du tableau périodique des éléments et en particulier les éléments choisis dans le groupe constitué par le fer, le cobalt et le nickel.

Le ou les métaux du groupe VIII sont déposés sur un support approprié et il faut leur adjoindre, un ou plusieurs éléments métalliques (ou un de leurs dérivés) choisis de préférence parmi le chrome, le molybdène, le tungstène, le titane, le zirconium, l'hafnium et les métaux de la famille des terre-rares.

Les catalyseurs contenant conjointement d'une part au moins un métal du groupe VIII et d'autre part au moins un élément dit additionnel choisi parmi le chrome, le molybdène, le tungstène, le titane le zirconium, l'hafnium et les métaux des terre-rares, voient accroître considérablement leur sélectivité dans la réaction d'hydrogénolyse, sélectivité se traduisant par l'obtention d'un méthane très pur, et possèdent également une durée de vie accrue. Il en résulte que la régénération du catalyseur en fin de cycle s'en trouve facilitée et conduit à l'obtention d'un catalyseur régénéré ayant d'autant mieux retrouvé son activité et sa sélectivité initiales que le catalyseur a été préparé conformément au procédé de la présente invention.

Les métaux du groupe VIII que l'on utilise dans le catalyseur n'appartiennent de préférence pas aux métaux nobles de ce groupe, (métaux de la famille du platine) car le pouvoir hydrogénolysant des métaux nobles est moins "profond" ce qui se manifeste par un rendement en méthane inférieur à celui que l'on obtient avec l'un au moins des métaux du groupe formé par le fer, le nickel et le cobalt et de préférence avec le nickel. Toutefois de faibles quantités de métaux nobles du groupe de platine pourraient être utilisées à titre de deuxième élément additionnel.

La teneur (exprimée en élément métal) en fer, et/ou cobalt et/ou nickel est de préférence comprise entre 0,5 et 50 % en poids par rapport à la masse totale du catalyseur prêt à l'emploi. La teneur en métal additionnel (exprimée en élément métal) choisi parmi le chrome, le molybdène, le tungstène, le titane, le zirconium,

les métaux de la famille des terre-rares et l'hafnium est généralement comprise entre 0,01 et 20 % en poids et de préférence entre 0,1 et 10 % en poids et plus particulièrement entre 0,3 et 0,8 %. Lorsqu'on utilise du nickel, la teneur préférée en nickel est comprise entre 15 et 25 % en poids.

En outre, à titre de deuxième métal additionnel, le catalyseur peut contenir des faibles quantités de métaux nobles de la famille du platine, par exemple entre 0,01 et 5 % en poids de platine ou de palladium, ou d'iridium, ou de rhodium etc, et de préférence entre 0,01 et 1 % en poids (exprimé en élément métal).

EXEMPLE 1

On prépare plusieurs catalyseurs à base d'alumine renfermant du nickel et du molybdène en vue de tester ensuite leur aptitude à être utilisés dans des réactions d'hydrogénation.

Sept catalyseurs (renfermant 20 % en poids d'oxyde de nickel et 10 % en poids d'oxyde de molybdène ) sont préparés suivant les méthodes suivantes :

Catalyseur A : (non conforme à l'invention)

A un support d'alumine de transition d'une surface spécifique (BET) égale à 250 m2/g et d'un volume poreux total de 0,6 cm3/g, on incorpore 20 % en poids d'oxyde de nickel par imprégnation à partir d'une solution aqueuse de nitrate de nickel. Le catalyseur est alors séché puis calciné à 500° C pendant 2 heures. On incorpore ensui 10 % en poids d'oxyde de molybdène par imprégnation à partir d'une so: tion de paramolybdate d'ammonium. Le catalyseur est ensuite séché et calciné à 500° C. On le traite ensuite par un courant d'$H_2S$ dilué à raison de 2 % en volume dans l'hydrogène à une température de 300° C pendant 5 heures. Surface spécifique : 200 m2/g.

Catalyseur B : (non conforme à l'invention)

On prépare un sol de boehmite ultra-fine de la façon suivante :

On procède à la fabrication d'un gâteau de gel d'alumine par précipitation en continu, d'une solution d'aluminate de sodium, présentant un rapport pondéral $\frac{Al_2O_3}{Na_2O}$ d'environ 1,08 et une concentration de 100 g/l exprimée en $Al_2O_3$ par une solution d'acide nitrique de concentration telle que la suspension titre environ 50 g/l d'alumine comptée en $Al_2O_3$ et que le rapport compté moléculairement

$NO_3/Al_2O_3$ soit de 0,16. Le pH de précipitation se situe alors aux environs de 9, on essore, on filtre et on lave le gâteau de gel ainsi préparé. On traite à 115° C pendant 24 heures ce gâteau dans un autoclave agité. Le produit obtenu se présente sous forme de pâte contenant 12 % d'alumine comptée en $Al_2O_3$.

La surface spécifique, mesurée par la méthode BET, de ce produit séché à l'étuve à 110° C, est environ de 300 m2/g, la surface géométrique de ce produit mesurée après séchage obtenu par dispersion dans l'isopropanol, distillation azéotropique puis évaporation de l'isopropanol est d'environ 550 m2/g. La photographie de ce produit obtenue au microscope électronique montre qu'il est constitué de boehmite ultra-fine entièrement fibrillaire composée de monocristaux en forme de lattes longues et très étroites s'associant souvent en faisceaux, les monocristaux ayant une dimension longitudinale qui atteint environ 500 à 1000 Å ; suivant les deux autres directions, si l'on assimile les monocristaux à des cylindres, on peut déduire de la surface spécifique mesurée par la méthode BET que ces monocristaux ont un diamètre moyen de 55 Å. Le diagramme Debye-Scherrer de ce produit présente des réflexions (hkl) absentes, un halo (012) et une réflexion nette (200).

Le sol ainsi obtenu, et qui constitue le liant, est mis en contact avec une quantité d'eau acidulée choisie de façon à ce que le pH de la composition finale soit inférieure à 4 et de façon à ce que le taux de dispersion de la composition soit de 30 %. Le liant est mélangé avec une charge d'alumine $\gamma$ se présentant sous forme de poudre. On choisit des quantités de liant et de charge telles que le support ainsi obtenu renferme, en poids, 30 % de liant et 70 % de charge. Le mélange charge-liant est effectué comme suit :

On forme des gouttes du mélange de l'alumine dispersée (liant) et de l'alumine non dispersée (charge) par l'intermédiaire de tubes calibrés présentant un diamètre intérieur d'environ 2,5 mm. Les gouttes tombent dans une colonne de 600 mm de diamètre

contenant une couche de pétrole d'environ 6 centimètres flottant sur une solution ammoniacale de concentration d'environ 20 g/l. Le temps de séjour des particules dans la solution ammoniacale est d'environ 2 minutes. Les gouttes s'arrondissent dans le pétrole et gélifient dans la solution ammoniacale. Les billes recueillies sont très rigides et subissent sans déformation les opérations de transvasement, elles sont ensuite séchées et calcinées à 950° C pendant 1 heure. Elles présentent un diamètre d'environ 3,5 à 4 mm.

Sur le support ainsi préparé, par la technique de la goutte d'huile, on ajoute du nickel et du molybdène selon les techniques indiquées pour le catalyseur A de façon à obtenir les mêmes teneurs en métaux que dans ce catalyseur A.

Catalyseur C : (conforme à l'invention)

On répète la fabrication du catalyseur B mais en ajoutant la solution de paramolybdate d'ammonium au début puis au cours de la méthode de la goutte d'huile, cette solution étant introduite dans le liant (boehmite dispersée). Le nickel est introduit ultérieurement comme pour le catalyseur B.

Catalyseur D : (non conforme à l'invention)

On prépare un sol de boehmite ultra-fine, selon la technique utilisée pour le catalyseur B. Le mélange du liant (boehmite dispersée) et de la charge (boehmite non dispersée) est extrudé après sa mise en pâte avec de l'eau et de l'acide nitrique : on prépare ainsi une pâte homogène après mélange pendant 3 heures d'une part de 500 grammes d'alumine et d'autre part d'une solution qui contient 250 cm3 d'eau distillée et 20 cm3 d'acide nitrique 0,001 M.

La pâte est extrudée à travers une filière de 1,5 mm sur une extrudeuse type à piston.

Les extrudés sont séchés à 300° C de façon à ce que la perte au feu des solides obtenus soit d'environ 20 %.

A la masse catalytique ainsi obtenue, on ajoute alors du nickel et du molybdène en utilisant les techniques utilisées pour la fabrication du catalyseur A.

Catalyseur E : (conforme à l'invention)

On répète la fabrication du catalyseur D mais en ajoutant la solution de paramolybdate d'ammonium pendant l'extrusion, dans le liant (boéhmite dispersée).

Le nickel est ajouté ultérieurement, comme pour le catalyseur D.

Catalyseur F : (non conforme à l'invention)

On prépare ur sol de boehmite ultra-fine selon la technique utilisée pour préparer le catalyseur B. Le mélange du liant (boehmite dispersée) et de la charge (boehmite non dispersée) est aggloméré à l'acide d'un granulateur tournant : on fait couler 500 grammes de la poudre sur le granulateur et simultanément on introduit sur le granulateur, en la versant, une solution aqueuse renfermant 250 cm3 d'eau distillée et 20 cm3 d'acide nitrique 0,001 M.

On mouille ainsi le drageoir ou le granulateur pendant que la poudre tourne.

La poudre grossit par collage des particules de poudre qui sont présentes.

On enlève les particules en les éjectant du drageoir par centrifugation puis on les sèche à 300° C de façon a ce que la perte au feu des solides obtenus soit d'environ 20 %.

A la masse catalytique ainsi obtenue, on ajoute de l'oxyde de nickel et de l'oxyde de molybdène selon la technique utilisée pour la préparation du catalyseur A.

Catalyseur G : (conforme à l'invention)

On répète la fabrication du catalyseur F mais en ajoutant la solution de paramolybdate d'ammonium au cours de la granulation, dans le liant (boéhmite dispersée).

Le nickel est ajouté ultérieurement, comme pour le catalyseur F.

Les catalyseurs B à G sont présulfurés comme le catalyseur A.

EXEMPLE 2

On prépare plusieurs catalyseurs à base d'alumine renfermant du nickel et du cérium en vue de les tester ensuite dans leur aptitude à être utilisés dans des réactions de méthanisation.

Sept catalyseurs H à N, renfermant 20 % en poids de nickel et 0,5 % en poids d'oxyde de cérium sont préparés comme suit :

Catalyseur H : (non conforme à l'invention)

On utilise un support d'alumine de transition d'une surface spécifique (BET) égale à 250 m3/g et d'un volume poreux total de 0,6 cm3/g ; 100 g de ce support ont été imprégnés, à la température ambiante, avec 50 cm3 d'une solution de nitrate de nickel contenant 40 % en poids de nickel. On laisse le solide et la solution en contact pendant deux heures, puis on met le solide imprégné dans une étuve où on le sèche sous courant d'air sec a une température de 110° C pendant 2 heures.

Le catalyseur sec est ensuite placé dans un four où il est porté progressivement à 450° C (en 1 heure) sous un courant d'air

séché sur alumine activée, et on le laisse encore pendant 2 heures à cette température.

Le produit obtenu est ensuite imprégné avec 50 cm3 d'une solution contenant 1,56 g de nitrate de cérium Ce $(N{\cdot}O_3)$ 3, 6 $H_2O$ . Ensuite, on procède comme on a fait après l'introduction du nickel.

Le catalyseur calciné est ensuite réduit dans le réacteur sous courant d'hydrogène à une température de l'ordre de 300° C et pendant une durée de 2 heures.

Le catalyseur fini contient :

20 % en poids de nickel et
0,5 % en poids de cérium

Catalyseur I : (non conforme à l'invention)

On utilise le sol de boéhmite ultra-fin préparé selon la technique indiquée pour la préparation du catalyseur B.

On met en forme ce sol selon la technique de la goutte d'huile utilisée pour la préparation du catalyseur B. Sur le support ainsi préparé, on ajoute du nickel et du cérium selon les techniques indiquées pour le catalyseur H de façon à obtenir les mêmes teneurs en métaux que dans ce catalyseur H.

Catalyseur J : (conforme à l'invention)

On répète la fabrication du catalyseur I mais en ajoutant la solution de nitrate de cérium au début puis au cours de la méthode de la goutte d'huile, cette solution étant introduite dans la charge (boéhmite non dispersée). Le nickel est introduit ultérieurement comme pour le catalyseur I.

Catalyseur K : (non conforme à l'invention)

On prépare un sol de boéhmite ultra-fine, selon la technique utilisée pour le batalyseur B. Le mélange du liant (boéhmite dispersée) et de la charge (boéhmite non dispersée) est extrudé après sa mise en pâte avec de l'eau et de l'acide nitrique : on prépare ainsi une pâte homogène après mélange pendant 3 heures d'une part de 500 grammes d'alumine et d'autre part d'une solution qui contient 250 cm3 d'eau distillée et 20 cm3 d'acide nitrique 0,001 M.

La pâte est extrudée à travers une filière de 1,5 mm sur une extrudeuse type à piston.

Les extrudés sont séchés à 300° C de façon à ce que la perte au feu des solides obtenus soit d'environ 20 %.

A la masse catalytique ainsi obtenue, on ajoute alors du nickel et du cérium en utilisant les techniques utilisées pour la fabrication du catalyseur H.

Catalyseur L : (conforme à l'invention)

On répète la fabrication du catalyseur K mais en ajoutant la solution de nitrate de cérium pendant l'extrusion, dans la charge (boéhmite non dispersée).

Le nickel est ajouté ultérieurement, comme pour le catalyseur K.

Catalyseur M : (non conforme à l'invention)

On prépare un sol de boéhmite ultra-fine selon la technique utilisée pour préparer le catalyseur I. Le mélange du liant (boéhmite dispersée) et de la charge (boéhmite non dispersée) est aggloméré à l'acide d'un granulateur tournant : on fait couler 500 grammes de la poudre sur le granulateur et simultanément on introduit sur

le granulateur, en la versant, une solution aqueuse renfermant 250 cm3 d'eau distillée et 20 cm3 d'acide nitrique 0,001 M.

On mouille ainsi le drageoir ou le granulateur pendant que la poudre tourne.

La poudre grossit par collage des particules de poudre qui sont présentes.

On enlève les particules en les éjectant du drageoir par centrifugation puis on les sèche à 300° C de façon à ce que la perte au feu des solides obtenus soit d'environ 20 %.

A la masse catalytique ainsi obtenue, on ajoute de l'oxyde de nickel et de l'oxyde de cérium selon la technique utilisée pour la préparation du catalyseur H.

Catalyseur N : (conforme à l'invention)

On répète la fabrication du catalyseur M mais en ajoutant la solution de nitrate de cérium au cours de la granulation, dans la charge (boéhmite non dispersée).

Le nickel est ajouté ultérieurement, comme pour le catalyseur M.

EXEMPLE 3

Les catalyseurs A à G sont testés pour éprouver leur activité et leur stabilité dans une réaction d'hydrogénation. On utilise un test de vieillissement accéléré qui se déroule de la manière suivante :

La charge à hydrogéner contient de l'isoprène dilué à raison de 10 % molaire dans du benzène. Afin de mesurer la résistance aux mercaptans du catalyseur, on ajoute de l'éthyl-mercaptan à raison

de 1000 ppm calculé en poids de soufre. Les conditions opératoires sont les suivantes :

| | | |
|---|---|---|
| Température | : | 105° C |
| Pression | : | 50 bars |
| VVH (volume de charge/volume catal/h) | : | 6 |
| $H_2$/ charge (entrée réacteur) | : | 1 mole/mole |

Le test se poursuit pendant environ 20 heures. Les résultats obtenus sont donnés dans le tableau 1.

TABLEAU 1

| %conversion de l'isoprène / Catalyseurs | après 2 heures | après 5 heures | après 10 heures | après 15 heures | après 20 heures |
|---|---|---|---|---|---|
| A | 81,7 | 80,8 | 78,9 | 77,8 | 76,5 |
| B | 80,5 | 80,30 | 80,1 | 79,5 | 78,5 |
| C | 82,3 | 82 | 81,7 | 81,5 | 81,1 |
| D | 80,5 | 80,3 | 80 | 79,4 | 78,4 |
| E | 82,3 | 82,1 | 81,7 | 81,6 | 81,2 |
| F | 80,7 | 80,2 | 79,5 | 78,6 | 78,0 |
| G | 82,5 | 82,0 | 80,7 | 80,3 | 79,9 |

On peut constater que les catalyseurs préparés de manière conventionnelle (A, B, D et F) sont moins actifs et moins stables que les catalyseurs préparés selon l'invention (C, E et G) qui ont une activité et une stabilité appréciables.

EXEMPLE 4

Les catalyseurs H à N sont testés dans une réaction de méthanation :

Chaque catalyseur est activé dans le réacteur par traitement au moyen d'un mélange de 5 % $H_2$ et 95 % $N_2$ en volume, circulant avec une vitesse spatiale (VVH) de 500 volumes par volume de catalyseur et par heure, pendant 20 heures à une température croissant progressivement de 330 à 430° C.

On fait circuler de haut en bas un gaz de synthèse et une phase liquide à travers 1,25 dm3 de catalyseur, disposé en lit fixe dans le réacteur. Le liquide est régulièrement distribué au moyen d'une plaque perforée. L'effluent est soutiré. La phase liquide est séparée de la phase gazeuse, à la sortie du réacteur, dans un séparateur et continuellement remise en circulation par une pompe et un échangeur de refroidissement ; le gaz n'est pas remis en circulation ; il est soutiré et analysé. On peut le soumettre à une condensation pour recueillir les produits formés.

On a utilisé un réacteur ayant un diamètre de 4 cm et une hauteur de 1 mètre. Le gaz de synthèse est constitué par un mélange de 25 % de monoxyde de carbone et de 75 % d'hydrogène.

Le débit de gaz injecté est de 6 m3/h dans les conditions normales de température et pression, donnant une vitesse superficielle de 4,2 cm/s à 325° C, température de l'expérience et pour 7 MPa.

La phase liquide est une coupe d'hydrocarbures paraffiniques désulfurée $C_{10}$ - $C_{16}$ présentant une densité de 0,85 à 20° C (environ 0,6 à 330° C) : sa viscosité à 330° C est d'environ 0,12 centipoise (0,12 MPa). Son débit mesuré à 20° C est d'environ 140 l/h,

soit environ 200 l/h à 330° C, correspondant à une vitesse superficielle de 4,5 cm/s et une VVH de 156.

Le liquide déchargé est recirculé. On en sépare périodiquement ou continuellement les produits légers formés, notamment le méthane, d'autres hydrocarbures légers et de l'eau.

On travaille de façon à avoir, avec chaque catalyseur, une sélectivité en méthane de 96 % au bout de 2000 heures. Les conversions du monoxyde de carbone, au bout de 2000 heures, sont données dans le tableau II.

Tableau II

| Catalyseur | Conversion du monoxyde de carbone |
|---|---|
| H | 86,0 |
| I | 86,5 |
| J | 87,7 |
| K | 86,3 |
| L | 87,4 |
| M | 86,2 |
| N | 87,1 |

# REVENDICATIONS

1/ Procédé de fabrication d'un catalyseur renfermant (a) un support constitué en majeure partie d'alumine et (b) une phase active renfermant au moins un métal du groupe VIII de la classification périodique des éléments et au moins un métal additionnel ou promoteur, le support mis en oeuvre pour la fabrication du catalyseur étant obtenu en effectuant le mélange d'un liant, en majeure partie à base d'alumine, et d'une charge, en majeure partie à base d'alumine, la mise en forme, le séchage et la calcination éventuelle dudit mélange, la proportion en poids de liant représentant 10 à 60% de la totalité du support, la proportion en poids de charge représentant 40 à 90% de la totalité su support, le liant d'alumine étant lui-même constitué d'une majeure partie d'alumine dispersée et éventuellement d'une mineure partie d'alumine non dispersée, (la partie d'alumine dispersée représentant au moins 70% en poids dudit liant), la charge d'alumine étant elle-même constituée d'une majeure partie d'alumine non dispersée et éventuellement d'une mineure partie d'alumine dispersée, (la partie d'alumine dispersée représentant moins de 10% en poids de ladite charge), le taux de dispersion de la composition résultant du mélange du liant et de la charge étant compris entre 10 et 60%, le procédé étant caractérisé en ce que l' on introduit une partie au moins de la phase active ou de son précurseur au cours de la fabrication du support soit dans le liant avant la procédure de mélange de la charge et du liant, soit dans la charge avant la procédure de mélange de la charge et du liant soit dans la charge ou dans le liant au cours de la procédure de mélange du liant et de la charge.

2/ Procédé selon la revendication 1 dans lequel, ladite procédure de mélange du liant et de la charge est choisie parmi la méthode de la goutte d'huile, la méthode d'extrusion et la méthode du drageoir tournant.

3/ Procédé selon l'une des revendications 1 et 2 dans lequel on introduit ladite partie au moins de la phase active, ou de son précurseur, avant le mélange de la charge du liant, dans le liant, le procédé étant caractérisé en ce que la partie de la phase active est introduite dans le liant par imprégnation du liant à l'aide d'une solution de ladite partie de la phase active ou par cogélification entre le liant et ladite partie de la phase active ou par coprécipitation entre un sel d'alumine et un sel de ladite partie de la phase active, la charge étant ajoutée ultérieurement.

4/ Procédé selon l'une des revendications 1 et 2 dans lequel on introduit ladite partie au moins de la phase active, ou de son précurseur, avant le mélange de la charge et du liant, dans la charge, le procédé étant caractérisé en ce que la partie au moins de la phase active est introduite dans la charge par imprégnation de la charge à l'aide d'une solution de ladite partie de la phase active ou par cogélification entre la charge et ladite partie de la phase active ou par coprécipitation entre un sel d'alumine et un sel de ladite partie de la phase active, le liant étant ajouté ultérieurement.

5/ Procédé selon l'une des revendications 1 et 2 dans lequel on introduit ladite partie au moins de la phase active, ou de son précurseur, au cours du mélange de la charge et du liant, en majeure partie dans le liant ou en majeure partie dans la charge.

6/ Procédé selon la revendication 5, dans lequel ladite partie au moins de la phase active est introduite préférentiellement dans le liant, lors du mélange de la charge et du liant, par un procédé consistant à introduire d'abord le liant en solution aqueuse puis un sel de la phase active puis la charge saturée au préalable par un sel adéquat de façon à ce que le sel de la phase active ne pénètre pas dans la charge.

7/ Procédé selon la revendication 5, dans lequel ladite partie au moins de la phase active est introduite préférentiellement dans la charge, lors du mélange de la charge et du liant, par un procédé consistant à introduire d'abord la charge en solution aqueuse puis un sel de la phase active, puis le liant saturé au préalable par un sel adéquat de façon à ce que le sel de la phase active ne pénètre pas dans le liant.

8/ Procédé selon la revendication 5, dans lequel on introduit simultanément une partie de la phase active, le liant et la charge, ladite partie de la phase active étant soit introduite préférentiellement dans le liant en inhibant la charge à l'aide d'un sel adéquat, soit introduite préférentiellement dans la charge en inhibant le liant à l'aide d'un sel adéquat.

9/ Procédé selon l'une des revendications 3 et 4, dans lequel on utilise la méthode de la goutte d'huile ou la méthode d'extrusion, caractérisé en ce que la majeure partie du ou des métaux additionnels est introduite dans le liant ou dans la charge et en ce que la majeure partie du ou des métaux du groupe VIII est introduite soit dans le liant, soit dans la charge, soit ultérieurement après la fabrication du support.

10/ Procédé selon l'une des revendications 3 et 4 dans lequel on utilise la méthode dite du drageoir tournant, caractérisé en ce que la majeure partie du ou des métaux additionnels est introduite soit dans le liant, soit dans la charge, le ou les métaux du groupe VIII étant introduits ultérieurement après la fabrication du support.

11/ Procédé selon la revendication 5 dans lequel, utilisant la méthode de la goutte d'huile ou d'extrusion, le ou les métaux additionnels sont introduits dans le liant, le ou les métaux VIII étant introduits dans le liant ou dans la charge.

12/ Procédé selon la revendication 5 dans lequel, utilisant la méthode de la goutte d'huile ou d'extrusion, le ou les métaux additionnels sont introduits dans la charge, le ou les métaux VIII étant introduits dans le liant ou dans la charge.

13/ Procédé selon la revendication 5 dans lequel, utilisant la méthode de la goutte d'huile ou d'extrusion, le ou les métaux additionnels sont introduits dans le liant ou dans la charge, le ou les métaux VIII étant introduits ultérieurement dans le support.

14/ Procédé selon la revendication 5 dans lequel, utilisant la méthode du drageoir tournant, le ou les métaux additionnels sont introduits dans la charge ou dans le liant, le ou les métaux VIII étant introduits ultérieurement dans le support.

15/ Catalyseurs obtenus selon l'une des revendications 1 à 13 et renfermant en poids par rapport au support d'alumine (a) 0,05 à 2% d'au moins un métal précieux de la famille du platine, ou 0,1 à 30% d'au moins un métal choisi parmi le fer, le cobalt et le nickel, et (b) 0,01 à 25% d'au moins un métal additionnel.

16/ Utilisation des catalyseurs selon la revendication 14 ou préparés selon l'une des revendications 1 à 13, dans les réactions d'hydrogénation d'hydrocarbures et dans les réactions d'hydrogénation de l'oxyde de carbone.

Office européen des brevets

**RAPPORT DE RECHERCHE EUROPEENNE**

0151893
Numéro de la demande

EP 84 40 2427

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | FR-A-2 527 197 (RHONE-POULENC)<br>* Page 5, lignes 16-20, 29-33; page 6, lignes 1-15; page 10, lignes 4-11; page 11, lignes 3-20; page 12, lignes 32-37; page 13, lignes 1-4; exemple 1; revendications 1,2,10 * | 1-3,5, 16 | B 01 J 21/04<br>B 01 J 37/02<br>C 07 C 1/04 |
| Y | | 1-5,16 | |
| | --- | | |
| Y,P | EP-A-0 098 181 (PRO CATALYSE)<br>* Revendications 1,2 * | 1-3,5, 16 | |
| | --- | | |
| Y | GB-A-1 590 436 (VOP)<br>* Page 1, lignes 63-79; page 2, lignes 95-110, 114-118; revendication 1 * | 1,2,4 | **DOMAINES TECHNIQUES RECHERCHES (Int. Cl.4)** |
| A | | 15 | B 01 J<br>C 07 C |
| | --- | | |
| Y | EP-A-0 073 703 (RHONE-POULENC)<br>* Revendications 1-10 * | 1 | |
| | --- | | |
| A | BE-A- 655 459 (PECHINEY)<br>* Exemple 1 * | 2 | |
| | --- | | |
| A | US-A-2 996 460 (NALCO)<br>* Colonne 6, lignes 29-38 * | 1 | |
| | --- -/- | | |

Le present rapport de recherche a été établi pour toutes les revendications

| Lieu de la recherche | Date d'achèvement de la recherche | Examinateur |
|---|---|---|
| LA HAYE | 13-03-1985 | SALA P.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen des brevets

**RAPPORT DE RECHERCHE EUROPEENNE**

0151893
Numéro de la demande

EP 84 40 2427



**DOCUMENTS CONSIDERES COMME PERTINENTS**

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 104 405 (VS DEPARTMENT OF ENERGY) * Revendications 1-3 * ----- | 15,16 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 13-03-1985 | SALA P.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82